# DEMANDE DE BREVET EUROPEEN

(11) **EP 0 922 522 A1**
(43) Date de publication de la demande: **16.06.1999**
(21) Numéro de dépôt: 98410133.7
(22) Date de dépôt: 26.11.1998
(51) Int. Cl.: B23K 9/32

(54) **Dispositif de réglage d'un poste de soudure à l'arc, et appareil de mesure doté d'un système de codage**

(30) Priorité: 03.12.1997 FR 9715509
(71) Demandeur: Constructions électriques de Vallieres-Ceval, 74150 Vallieres (FR)
(72) Inventeur: Chappel, Bernard, 74150 Vallières (FR)
(74) Mandataire: Hecké, Gérard

(57) **Abrégé**

Un poste de soudure à l'arc à transformateur 12 abaisseur de tension comporte un enroulement primaire 14 relié à une source 17 de tension alternative, et un enroulement secondaire 16 connecté à une pince 34 de mise à la masse, et à une électrode 36 de soudage. L'épaisseur des tôles à souder est déterminée au moyen d'un appareil de mesure comprenant un pied à coulisse 64 associé à un afficheur destiné à indiquer un code prédéterminé correspondant au diamètre de l'électrode 36 à utiliser, et au réglage du transformateur.

## Description

L'invention est relative à un dispositif de réglage d'un poste de soudure à l'arc en fonction de l'épaisseur des tôles en acier à souder, ledit poste comprenant:
- un transformateur abaisseur de tension ayant un enroulement primaire relié à une source de tension alternative, et un enroulement secondaire connecté à une pince de mise à la masse, et à une électrode (36) de soudage,
- et des moyens d'ajustage des caractéristiques de tension et d'intensité du transformateur.

Il est connu d'utiliser dans les postes de soudures à l'arc, des électrodes en acier de différents diamètres en fonction de l'épaisseur et de la nature des tôles à souder. Les électrodes commercialisées à ce jour, présentent toutes des couleurs grises identiques portant des repères d'identification en bout de tiges. En cas de perte ou d'effacement de ces repères, le choix de l'électrode adaptée à l'épaisseur de la tôle à souder devient difficile. De plus, l'ajustage de l'intensité du courant d'arc de soudage peut s'avérer problématique en cas d'usage d'une électrode n'ayant pas le bon diamètre.

Le document GB 685714 décrit un commutateur de réglage électrique d'un générateur de soudage, sans faire usage d'un appareil de mesure à pied à coulisse servant à mesurer l'épaisseur des tôles à souder.

Le document FR 2062315 représente un pied à coulisse équipé d'un indicateur à cadran, mais ne fait pas allusion à des applications avec des paramètres de réglage pour le soudage.

Le premier objet de l'invention consiste à réaliser un dispositif de réglage d'un poste de soudure à l'arc permettant d'améliorer le degré de corrélation entre le type de l'électrode, et l'intensité du courant d'arc.

Le dispositif de réglage selon l'invention est caractérisé en ce que l'épaisseur des tôles à souder est déterminée au moyen d'un appareil de mesure comprenant un pied à coulisse associé à un afficheur destiné à indiquer un code prédéterminé correspondant au diamètre de l'électrode à utiliser, et au réglage du transformateur.

Selon un mode de réalisation préférentiel, l'afficheur analogique de l'appareil de mesure comporte une aiguille indicatrice se déplaçant en regard d'un cadran subdivisé en plusieurs zones de référence de colorations diverses constituant un code couleur.

Lesdits moyens d'ajustage comportent un variateur électronique piloté par un dispositif de réglage à commutateur coopérant avec un indicateur utilisant ledit code de l'appareil de mesure.

Selon une variante de réalisation, l'afficheur numérique de l'appareil de mesure coopère avec une unité de traitement à microprocesseur pour transformer la mesure de l'épaisseur des tôles en un code alphanumérique commun pour la détermination du diamètre des électrodes et du réglage du transformateur.

Selon une autre caractéristique, le variateur électronique comprend un gradateur à triac inséré en série avec l'enroulement primaire, et un coupe-circuit thermique sensible à l'échauffement de l'enroulement secondaire traversé par le courant de soudage. Le dispositif de réglage du variateur électronique est doté d'un potentiomètre ajusté au moyen d'un commutateur rotatif, lequel est équipé d'un index se déplaçant en regard de l'indicateur.

Un deuxième objet de l'invention concerne également un appareil de mesure pour un poste de soudure à l'arc permettant d'obtenir un réglage précis et rapide du transformateur.

L'appareil de mesure selon l'invention est caractérisé en ce qu'il comporte un pied à coulisse pour mesurer l'épaisseur des tôles à souder, et des moyens pour afficher un code prédéterminé correspondant au diamètre de l'électrode à utiliser, et au réglage de transformateur.

D'autres avantages et caractéristiques ressortiront plus clairement de la description qui va suivre d'un mode de réalisation de l'invention, donné à titre d'exemple non limitatif et représenté aux dessins annexés dans lesquels :
- la figure 1 est une vue schématique du circuit électrique du poste de soudage à l'arc ;
- la figure 2 montre une vue de détail à échelle agrandie de la figure 1, représentant le dispositif de réglage du variateur électronique ;
- la figure 3 est une vue en élévation de l'appareil de mesure selon l'invention;
- la figure 4 montre un tableau de correspondance entre les épaisseurs des tôles à souder, les diamètres des électrodes à utiliser, et le code couleur ;
- les figures 5 à 7 représentent les trois opérations successives pour le choix des électrodes et le réglage du transformateur ;
- la figure 8 est une variante de réalisation de l'appareil de mesure de la figure 2.

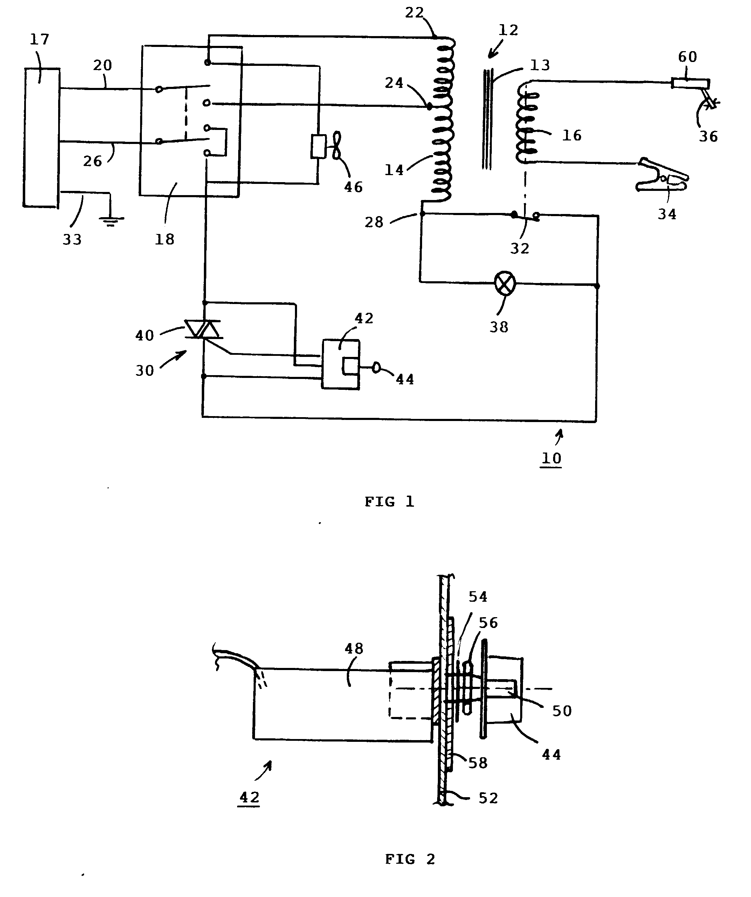

En référence à la figure 1, un circuit d'alimentation 10 d'un poste de soudure à l'arc, comporte un transformateur 12 abaisseur de tension, ayant un circuit magnétique 13 sur lequel sont bobinés un enroulement primaire 14 et un enroulement secondaire 16.

L'enroulement primaire 14 est raccordé électriquement à une source 17 à tension alternative monophasée par l'intermédiaire d'un sélecteur de tension 18 permettant la connexion du conducteur de phase 20, soit à la borne d'entrée 22, soit à un point milieu 24 de l'enroulement primaire 14. Le conducteur de neutre 26 est branché à la borne de sortie 28 de l'enroulement primaire 14 à travers un variateur électronique 30, et un coupe-circuit thermique 32. La source 17 comprend en plus un conducteur de terre 33 connecté à la terre.

L'enroulement secondaire 16 est branché à une pince 34 de mise à la masse, et à l'électrode 36 en acier pour le soudage à l'arc.

Le coupe-circuit thermique 32 est formé par un interrupteur de sécurité normalement fermé lorsque la température de l'enroulement secondaire 16 se trouve sous un seuil prédéterminé. La lampe 38 en parallèle sur l'interrupteur est alors éteinte, et l'enroulement primaire 14 est excité. En cas de dépassement du seuil de température, le coupe-circuit thermique 32 est commuté automatiquement vers l'état ouvert, et coupe l'alimentation de l'enroulement primaire 14 avec allumage de la lampe 38.

Le variateur électronique 30 est doté d'un gradateur à triac 40 inséré en série entre le sélecteur de tension 18 et le coupe-circuit thermique 32. La commande du triac 40 intervient au moyen d'un dispositif de réglage 42 à commutateur 44 accessible depuis la face avant du poste à souder. Il est clair que le gradateur à triac 40 peut être remplacé par tout autre composant électronique ou électromécanique permettant un réglage de la tension et du courant d'alimentation de l'enroulement primaire 14.

Le transformateur 12 est refroidi au moyen d'un ventilateur 46 connecté au niveau du sélecteur de tension 18 entre la borne 22, et le triac 40 du variateur électronique 30.

Sur la figure 2, le dispositif de réglage 42 du triac 40 est formé par un élément résistif, par exemple un potentiomètre 48 logé à l'intérieur du boîtier, et ayant un axe 50 de commande traversant un orifice ménagé dans la face avant 52 du boîtier.

La fixation du potentiomètre 48 est effectuée depuis l'extérieur au moyen d'une rondelle 54 et d'un écrou 56. Le bouton de commutateur 44 rotatif est enfilé sur l'extrémité de l'axe 50, et comprend un index ajustable placé en regard d'un indicateur 58 permettant de déterminer la puissance nécessaire au transformateur 12 pour le soudage d'une tôle d'acier d'épaisseur prédéterminée.

Il est clair que l'élément résistif du dispositif de réglage 42 peut être remplacé par tout autre circuit équivalent susceptible de faire varier la tension de commande du triac 40.

L'électrode 36 en forme de tige cylindrique en acier, présente une longueur voisine de 350 mm, dont l'une des extrémités est introduite dans un orifice d'un support 60 isolant. L'autre extrémité active de l'électrode est orientée du côté de la tôle en acier à souder, de manière à engendrer un arc de soudage lors de la mise sous tension du transformateur 12. La tension aux bornes de l'enroulement secondaire 16 est appliquée entre l'électrode 36 et la pince 34 de mise à la masse de la tôle à souder. Cette tension secondaire varie entre 25V et 49V en fonction de l'ajustage du variateur 30 pour fixer la tension d'amorçage de l'arc de soudage. L'intensité secondaire varie entre 20A et 240A selon le type d'électrode 36 et l'épaisseur des tôles à souder.

Pour obtenir un soudage optimum, il est en effet primordial d'adapter l'épaisseur de la tôle à souder au diamètre de l'électrode, et à l'intensité du courant secondaire délivré par le transformateur 12. Le choix de l'électrode 36, et le réglage du transformateur 12 constituent deux paramètres essentiels pour réaliser une soudure ayant une bonne résistance mécanique.

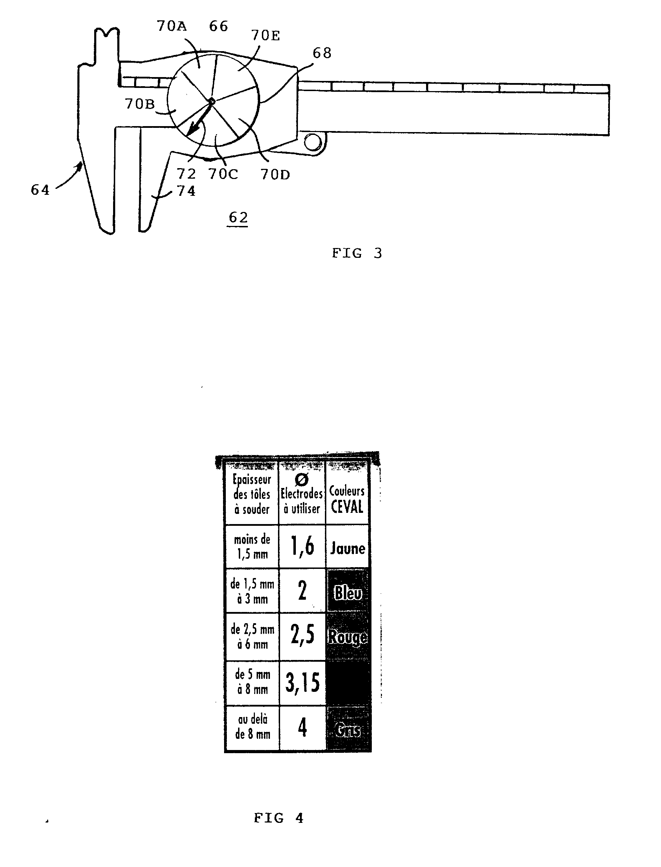

Sur la figure 3, un appareil de mesure 62 de l'épaisseur des tôles à souder comporte un pied à coulisse 64 associé à un afficheur 66 analogique, lequel est équipé d'un cadran 68 subdivisé en différentes zones de références 70A, 70B, 70C, 70D, 70E ayant diverses colorations correspondant à des épaisseurs des tôles à souder. Ainsi à chaque zone de couleur du cadran 68 correspond un diamètre déterminé de l'électrode 36 à utiliser pour le soudage. L'aiguille 72 indicatrice de l'afficheur 66 est reliée au curseur mobile 74 du pied à coulisse 64 par une liaison mécanique transformant le mouvement de translation du curseur 74 en un mouvement de rotation de l'aiguille 72.

Le tableau de la figure 4 indique la correspondance entre les épaisseurs des tôles à souder, le diamètre des électrodes 36 à utiliser, et le code couleur des zones de références 70A, 70B, 70C, 70D, 70E de l'afficheur 66.

La première zone de référence 70A en jaune préconise une électrode de 1,6 mm de diamètre pour des tôles ayant des épaisseurs de moins de 1,5 mm. La deuxième zone de référence 70B en bleu correspond à une électrode de 2 mm de diamètre pour des épaisseurs de tôles comprises entre 1, 5 mm et 3 mm. La troisième zone de référence 70C en rouge correspond à une électrode de 2,5 mm de diamètre pour des épaisseurs de tôles de 3 mm à 6 mm. La quatrième zone de référence 70D en vert correspond à une électrode de 3,5 mm de diamètre pour des épaisseurs de tôles de 6 mm à 8 mm. Enfin, la cinquième zone de référence 70E en gris correspond à une électrode de 4 mm de diamètre pour des épaisseurs de tôles supérieures à 8 mm.

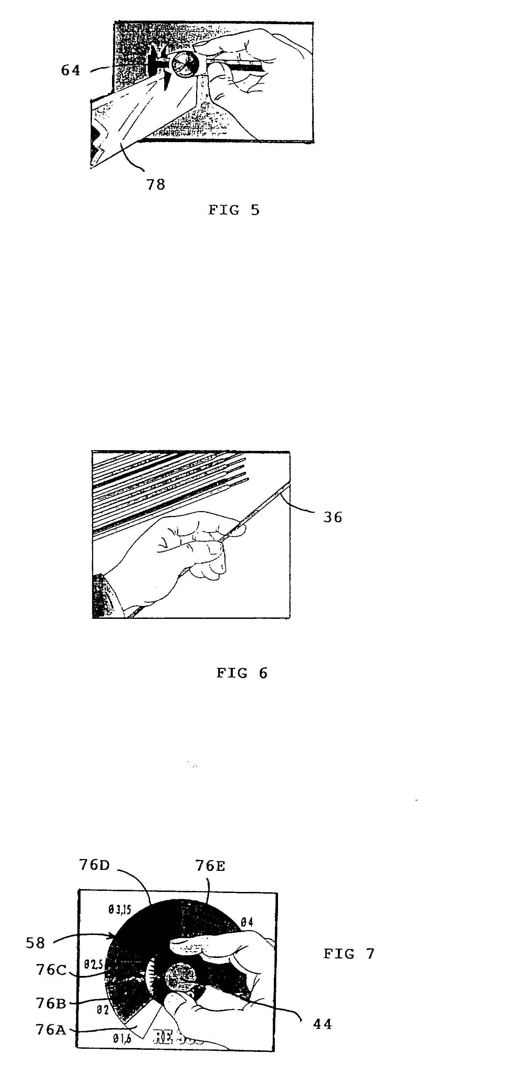

L'indicateur 58 associé au commutateur 44 du dispositif de réglage 42 comprend le même système de codage couleur que celui de l'afficheur 66 de l'appareil de mesure 62. Sur la figure 7, l'indicateur 58 comporte des zones de référence 76A, 76B, 76C, 76D, 76E respectivement avec des colorations en jaune, bleu, rouge, noir et gris, et portant les diamètres spécifiques des électrodes 36.

Les opérations pour déterminer le type d'électrodes 36, et le réglage du transformateur 12 en fonction de l'épaisseur des tôles à souder, sont illustrées schématiquement sur les figures 5 à 7 :

A l'aide du pied à coulisse 64, on mesure l'épaisseur de la tôle 78 à souder pour définir le code couleur du diamètre de l'électrode 36 à utiliser pour le soudage à l'arc. Le code couleur est indiqué par l'aiguille 72 de l'afficheur 66 analogique (figure 5).

Sur la figure 6 on choisit une électrode 36 avec coloration correspondante, et on l'introduit dans le support 60 isolant constituant un porte-électrode. L'électrode 36 est reliée électriquement à l'une des bornes de l'enroulement secondaire 16.

La troisième opération consiste à positionner le commutateur 44 du dispositif de réglage 42 sur le même code couleur de l'indicateur 58 de manière à adapter le réglage du triac 40 et l'intensité du courant secondaire du transformateur 12 au diamètre de l'électrode, et à l'épaisseur de la tôle à souder. Pour une électrode de diamètre 1,6 mm, l'intensité du courant sera de l'ordre de 20A. Pour une électrode de 2,5 mm, l'intensité du soudage sera de 80A.

Les conditions sont alors réunies pour obtenir un soudage fiable bénéficiant d'une résistance mécanique élevée.

Il est clair que l'afficheur 66 analogique à code couleur de l'appareil de mesure 62 de la figure 3 peut être remplacé par tout autre dispositif de visualisation faisant usage d'un autre système de codage pour définir les diamètres des électrodes. Il est ainsi possible de prévoir un système de codage numérique ou alphanumérique, qui sera repris à l'identique sur les électrodes 36, et l'indicateur 58 de puissance du transformateur 12.

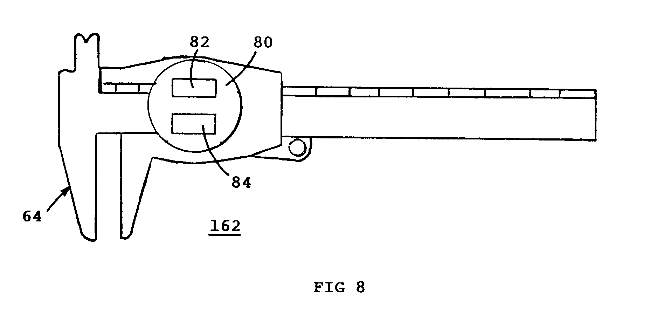

Selon la variante de réalisation de la figure 8, le pied à coulisse 64 de l'appareil de mesure 162 est associé à un afficheur 80 numérique à cadran circulaire ayant une première zone 82 destinée à indiquer l'épaisseur réelle mesurée en millimètres de la tôle à souder, et une deuxième zone 84 d'affichage d'un code prédéterminé calculé par une unité de traitement à microprocesseur. Le code correspond au diamètre de l'électrode 36 à insérer dans le support 60, et au réglage du transformateur 12. Dans le cas du dispositif de réglage 42 de la figure 2, le réglage du triac 40 s'effectue par une action manuelle sur le commutateur 44.

Il est également possible de transmettre automatiquement par infrarouge le signal de codage à un commutateur motorisé pour le réglage à distance du triac 40.

L'afficheur 80 peut être formé par des diodes LED électroluminescentes, ou par un écran à cristaux liquides LCD.

## Revendications

1. Dispositif de réglage d'un poste de soudure à l'arc en fonction de l'épaisseur des tôles (78) en acier à souder, ledit poste comprenant :
- un transformateur (12) abaisseur de tension ayant un enroulement primaire (14) relié à une source (17) de tension alternative, et un enroulement secondaire (16) connecté à une pince (34) de mise à la masse, et à une électrode (36) de soudage,
- et des moyens d'ajustage des caractéristiques de tension et d'intensité du transformateur (12),
caractérisé en ce que l'épaisseur des tôles (78) à souder est déterminée au moyen d'un appareil de mesure (62, 162) comprenant un pied à coulisse (64) associé à un afficheur (66, 80) destiné à indiquer un code prédéterminé correspondant au diamètre de l'électrode (36) à utiliser, et au réglage du transformateur (12).

2. Dispositif de réglage selon la revendication 1, caractérisé en ce que l'afficheur (66) analogique de l'appareil de mesure (62) comporte une aiguille (72) indicatrice se déplaçant en regard d'un cadran (68) subdivisé en plusieurs zones de référence (70A, 70B, 70C, 70D, 70E) de colorations diverses constituant un code couleur.

3. Dispositif de réglage selon la revendication 1 ou 2, caractérisé en ce que lesdits moyens d'ajustage comportent un variateur électronique (30) piloté par un dispositif de réglage (42) à commutateur (44) coopérant avec un indicateur (58) utilisant ledit code de l'appareil de mesure (62, 162).

4. Dispositif de réglage selon la revendication 1, caractérisé en ce que l'afficheur (80) numérique de l'appareil de mesure (162) coopère avec une unité de traitement à microprocesseur pour transformer la mesure de l'épaisseur des tôles en un code alphanumérique commun pour la détermination du diamètre des électrodes (36) et du réglage du transformateur (12).

5. Dispositif de réglage selon la revendication 3, caractérisé en ce que le variateur électronique (30) comprend un gradateur à triac (40) inséré en série avec l'enroulement primaire (14), et un coupe-circuit thermique (32) sensible à l'échauffement de l'enroulement secondaire (16) traversé par le courant de soudage.

6. Dispositif de réglage selon la revendication 3 ou 5, caractérisé en ce que le dispositif de réglage (42) du variateur électronique (30) est doté d'un potentiomètre (48) ajusté par le commutateur (44) rotatif, lequel est équipé d'un index se déplaçant en regard de l'indicateur (58).

7. Appareil de mesure pour un poste de soudure à arc faisant usage d'électrodes consommables en acier, appareil caractérisé en ce qu'il comporte un pied à coulisse (64) pour mesurer l'épaisseur des tôles (78) à souder, et des moyens pour afficher un code prédéterminé correspondant au diamètre de l'électrode à utiliser, et au réglage de transformateur (12).

8. Appareil de mesure selon la revendication 7, caractérisé en ce que lesdits moyens comportent un afficheur (66) analogique d'un code couleur.

9. Appareil de mesure selon la revendication 7, caractérisé en ce que lesdits moyens comportent un afficheur (80) à diodes électroluminescentes ou à cristaux liquides pour indiquer un code alphanumérique.
